Europäisches Patentamt

(19) European Patent Office

Office européen des brevets

(11) Publication number : **0 454 350 A1**

# (12) EUROPEAN PATENT APPLICATION

(21) Application number : 91303406.2

(22) Date of filing : 17.04.91

(51) Int. Cl.⁵ : **B05D 5/00,** B05D 7/14, B32B 15/08

(30) Priority : 23.04.90 US 513142

(43) Date of publication of application :
30.10.91 Bulletin 91/44

(84) Designated Contracting States :
DE FR GB IT SE

(71) Applicant : HUGHES AIRCRAFT COMPANY
7200 Hughes Terrace
Los Angeles, CA 90045-0066 (US)

(72) Inventor : Chang, David B.
14212 Livingston
Tustin, California 92680 (US)
Inventor : Shih, I-Fu
3351 St. Albans Drive
Los Alamitos, California 90720 (US)
Inventor : Pollack, Slava A.
628 Via Del Monte
Palos Verdes Estate, California 90274 (US)
Inventor : Drummond, James E.
P.O. Box 107
Lincoln City, Oregon 97367-0107 (US)

(74) Representative : Colgan, Stephen James et al
CARPMAELS & RANSFORD 43 Bloomsbury
Square
London WC1A 2RA (GB)

(54) Temperature moderating coating.

(57) A method and a coating for minimizing the temperature increase of a vehicle 10 under illumination by solar radiation 20. The method of the present invention includes the step of determining a first spectrum of wavelengths over which the vehicle 10 emits substantial electromagnetic energy. The method further includes the step of applying a selectively reflective paint coating to the vehicle 10. The applied paint coating substantially absorbs electromagnetic energy over the first wavelength spectrum and substantially reflects electromagnetic radiation over a second wavelength spectrum not overlapping the first spectrum.

EP 0 454 350 A1

FIG. 1

## BACKGROUND OF THE INVENTION

Field of the Invention:

The present invention relates to coating compositions which reflect electromagnetic radiation. More specifically, the present invention relates to methods of utilizing such coatings to limit the temperature increase of objects exposed to solar radiation.

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

Description of the Related Art:

The surfaces of parked vehicles exposed to direct solar radiation for extended periods can reach temperatures of one hundred thirty to one hundred forty degrees Fahrenheit. At these elevated temperatures conventional automobile paint often begins to decompose. Further, the accompanying high temperatures within the vehicle's interior can lead to significant passenger discomfort.

As is well known, lighter colored paints reflect a greater percentage of incident solar radiation than do darker colors and hence do not experience the same degree of temperature increase. This principle is utilized by spacecraft designers to control the temperature of satellites by selectively exposing light and dark surfaces thereof to the sun. Unfortunately, many automobile purchasers prefer the appearance of vehicles painted exclusively in dark colors.

One potential method of reducing the temperature of automobiles exposed to the sun entails coating the painted vehicle surfaces with a reflective coating. However, such a coating would have to be applied so as not to reflect the visible portion of the electromagnetic spectrum. This requirement is necessary from a safety standpoint to prevent excessive glare and is aesthetically desirable because it allows the color of the underlying paint to be readily, seen. It follows that such a coating would need to be designed to selectively reflect substantially only infrared radiation, which comprises twenty-five to thirty percent of solar energy incident on the earth. However, the problem with such a coating is that even though it reduces the heat load from the sun, it does not provide any means for the heat which is trapped within the vehicle to escape. The coating uniformly reflects all IR radiation, hence, the far infrared energy build-up on the interior of the car is reflected back into the interior by such a coating.

Hence, a need exists in the art for a method of minimizing the temperature increase of a vehicle directly exposed to solar radiation.

## SUMMARY OF THE INVENTION

The need in the art for a technique for minimizing the temperature increase of a vehicle under illumination by solar radiation is addressed by the coating and method of the present invention. The coating of the invention comprises a paint which exhibits good reflectivity in the near infrared region and to which has been added a material (such as Welsbach material) which provides high emissivity in the far infrared region. The method of the present invention includes the step of determining a first spectrum of wavelengths over which a vehicle emits substantial electromagnetic energy. The method further includes the step of applying a selectively reflective paint coating to the vehicle. The applied paint coating substantially absorbs electromagnetic energy over the first wavelength spectrum and substantially reflects electromagnetic radiation over a second wavelength spectrum not overlapping the first spectrum.

## BRIEF DESCRIPTION OF THE DRAWINGS

Fig. 1 is representative of a vehicle under illumination by solar radiation.
Fig. 2 is a graphical representation of the spectral distribution of solar energy as a function of wavelength.
Fig. 3 shows a first preferred ideal reflectivity profile for a selectively reflective vehicle paint.
Fig. 4 is a preferred emissivity (absorptivity) profile deduced from the reflectivity profile of Fig. 3.
Fig. 5 is a graph of the atmospheric radiance for a cloud-free sky at zenith angles of 30, 45, 75 and 85 degrees as a function of frequency and wavelength.
Fig. 6 shows a second preferred paint reflectivity profile.

## DETAILED DESCRIPTION OF THE INVENTION

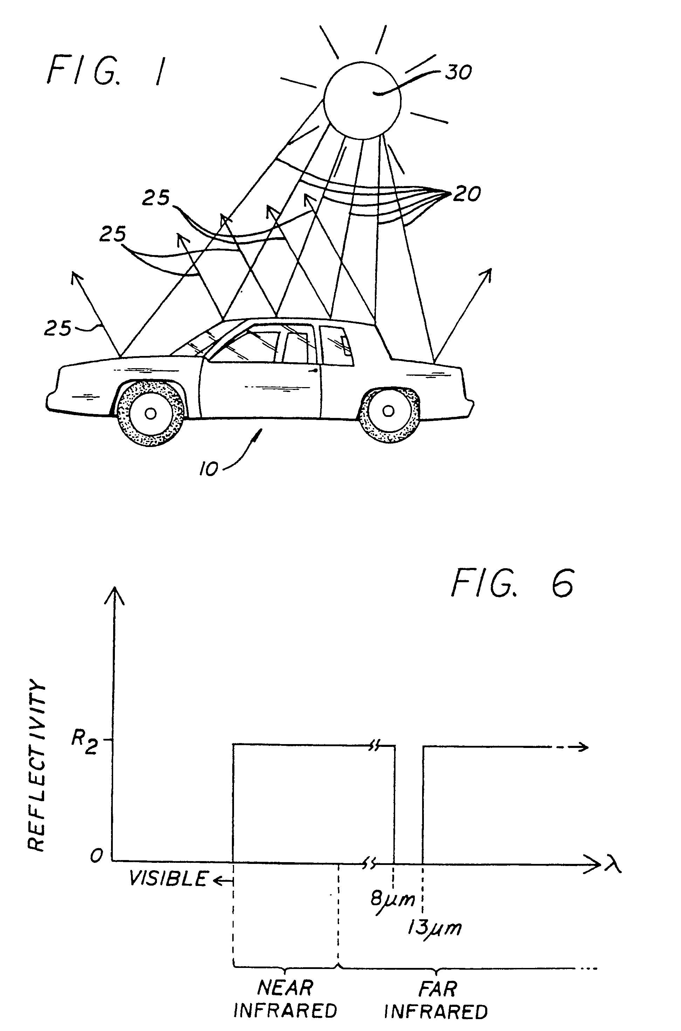

Fig. 1 shows a vehicle 10 exposed to rays 20 from the sun 30. The extent of temperature increase experienced by the vehicle 10 due to irradiation by the sun 30 is primarily governed by three factors. First, the amount of energy reaching the body of the vehicle 10 is a function of the reflectivity of the painted surfaces thereof. Specifically, a fraction of the rays 20 will be reflected as rays 25 by painted surfaces of the vehicle system 10.

Second, the amount of energy radiated electromagnetically by the body of the vehicle 10 depends upon the average emissivity thereof. In particular, the heat dissipated (H) by the body of the vehicle 10 through radiation is given by:

$$H = \epsilon A \sigma T_{car}^4 \quad [1]$$

where $\epsilon$ is the average emissivity of the vehicle 10, A is the surface area of the vehicle 10, $\sigma$ is the Stephan-Boltzmann constant and $T_{car}$ is the temperature of the vehicle 10.

Third, a portion of the solar energy absorbed by the vehicle 10 is thermodynamically lost through convection.

Based on the first factor, it would appear that one method of limiting the temperature increase of a vehicle due to solar irradiance would be to alter the reflectivity of the painted surfaces to substantially reflect incident solar radiation. Unfortunately, the effect of such a scheme would be to substantially prevent a vehicle from radiating electromagnetic energy in accordance with equation [1] above. That is, a uniformly reflective vehicle paint coating would act to "trap" heat acquired either thermodynamically or through absorption of solar radiation by preventing the emission thereof via electromagnetic radiation. In other words, the radiation on the interior of the vehicle would be reflected by the coating back into the car. Consequently, it is an object of the present invention to limit the temperature increase of a vehicle by reflecting a substantial percentage of the solar radiation incident thereon while simultaneously allowing the vehicle to dissipate heat by radiating electromagnetic energy. As discussed below, the method of the present invention addresses this objective by prescribing the application of a selectively reflective paint coating to the surface of the vehicle 10.

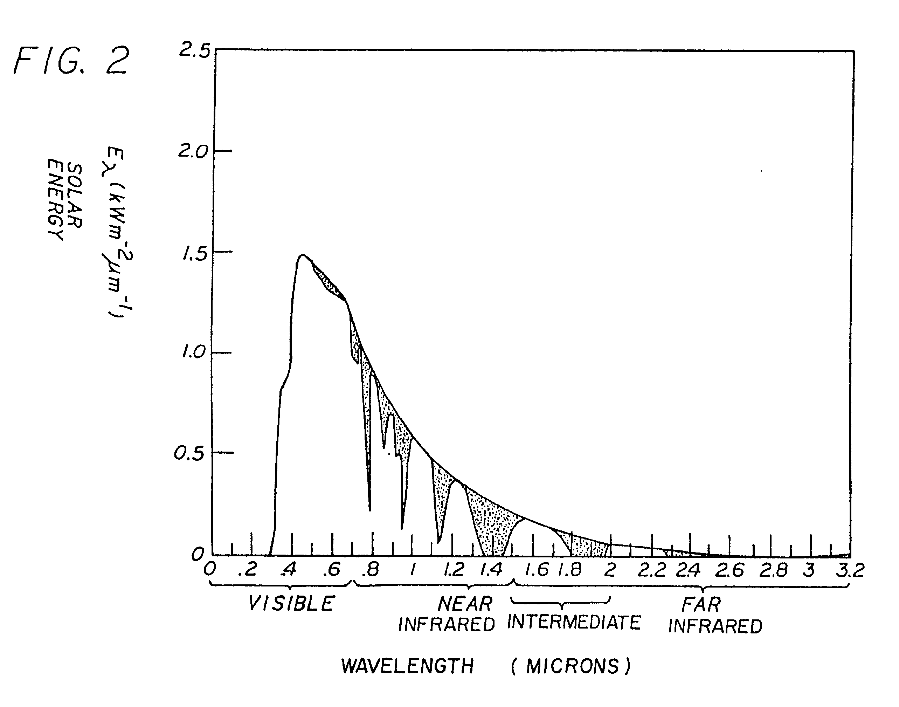

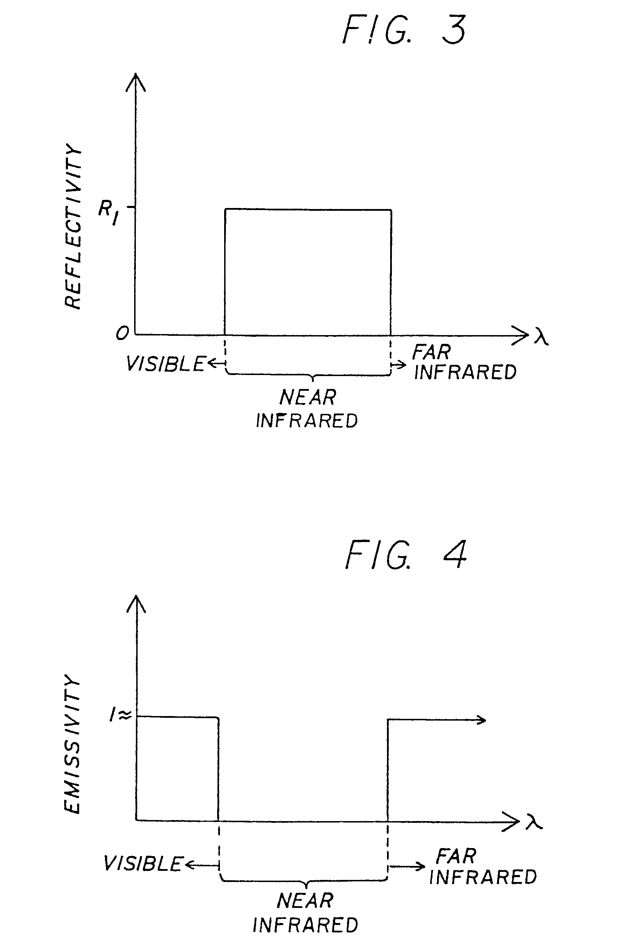

Fig. 2 is a graphical representation of the spectral distribution of solar energy as a function of wavelength. As shown in Fig. 2, wavelengths corresponding to the visible region extend from approximately 0.4 to 0.7 μm., the near-infrared region from 0.7 to 1.5 μm., the intermediate region from 1.5 to 2.0 μm and the far-infrared from 2 to 10 μm. As is evident upon inspection of Fig. 2, a paint coating which was substantially reflective throughout these regions would prevent a substantial percentage of incident solar radiation from reaching the body of the vehicle 10. However, as mentioned above, reflection of visible radiation may be hazardous (due to excessive glare) and may impair perception of the color of painted vehicle surfaces. Moreover, a substantial percentage of the heat dissipated by a typical vehicle is in the form of electromagnetic radiation in the far-infrared region. It follows that a first preferred ideal reflectivity profile for a selectively reflective vehicle paint would be substantially similar to that shown in Fig. 3.

As shown by the preferred profile of Fig. 3, in accordance with the present teachings, the desired reflectivity is zero in the visible and far-infrared regions. The lack of reflectivity throughout the visible region reduces glare, while the absence of reflectivity in the far-infrared region allows the vehicle 10 to dissipate heat via electromagnetic emission. Moreover, as a result of the paucity of incident solar energy in the far-infrared region (Fig. 2) the lack of paint reflectivity therein does not result in significant energy absorption by the vehicle 10. Conversely, the reflection coefficient within the near-infrared range rises to a value of $R_1$. In the limiting case where $R_1$ is substantially equal to unity, a substantial percentage of incident solar energy (see Fig. 2) is prevented from reaching the vehicle 10. Once a preferred reflectivity profile such as Fig. 3 has been selected, the corresponding emissivity profile may be deduced from the expression:

$$\alpha = \epsilon = 1 - \rho - T \quad [2]$$

where $\alpha$ = absorptivity, $\epsilon$ = emissivity, $\rho$ = reflectivity, and T = transmissivity. In addition, by Kirchhoff's Law emissivity is equivalent to absorptivity:

$$\alpha = \epsilon \quad [3]$$

Consider now the opaque paints listed in the table below. When such paints have been modified by the addition of a Welsbach material (a material which is selectively reflective and emissive for distinct portions of the spectrum) the transmissivity (T) is substantially zero. (Silicon oxy-nitrides and other heavy metal oxides may be used as Welsbach materials.) Accordingly, equation [2] reduces to:

$$\alpha = \epsilon = 1 - \rho \quad [4]$$

Thus, by inserting the values for $\rho$ from Fig. 3 into equation [4], the preferred emissivity (absorptivity) profile of Fig. 4 is obtained. Assuming the transmissivity (T) to be substantially zero as in equation [4], Fig. 4 yields an emissivity of approximately unity across the visible wavelength spectrum. Similarly, with the aid of equation [4] a reflectivity value of approximately zero translates into an emissivity (absorptivity) of substantially unity within the far-infrared region of Fig. 4. This prevents painted surfaces of the vehicle 10 from trapping heat therein, and thereby allows the vehicle 10 to dissipate heat into the surrounding atmosphere in the form of infrared radiation. In addition, taking the value of $R_1$ in Fig. 3 to be substantially unity yields a near-infrared emissivity of approximately zero in Fig. 4.

Next, in accordance with the present teachings, an appropriately selectively reflective paint coating is created within the preferred reflectivity and emissivity profiles determined above (Figs. 3 and 4). The selectively reflective paint includes pigment particles suspended in a binder. The following expression relates the reflection coefficient (R) to the index of refraction (n) of the binder and the absorptivity (K) of the selectively reflective paint suspension:

$$R = ((n-1)^2 + n^2K^2)/((n + 1)^2 + n^2K^2) \quad [5]$$

As is evident from equation [5], the preferred profiles of Figs. 3 and 4 may be generated by grinding the pigment particles from materials having high emissivity (absorptivity) in the visible and far-infrared regions and small emissivity in the near-infrared region. An assortment of colors may be produced by combining individual pigments having profiles approximating those of Fig. 3 and Fig. 4. In the event available pigments do not exhibit the requisite reflectivity in the near-infrared region, a supplemental material such as a white pigment may be used as an undercoat to enhance reflection of near-infrared radiation. The following table lists a number of commercially available pigments from which suitably selectively reflective shades of vehicle paint may be developed in accordance with the teachings of the present invention (i.e., by the addition of an appropriately selectively reflective material such as a Welsbach material).

| VENDOR | PIGMENT NAME | CATALOG No. |
|---|---|---|
| Ferro | Blue Spinel | V-5200 |
| Ferro | Green Spinel | V-11669 |
| Ferro | Green Spinel | F-J686 |
| Ferro | Green Spinel | V-12600 |
| Hoechst-Celanese | PV Fast Maroon | 13-3501 |
| Hoechst-Celanese | Host. Brown | 17-3075 |
| Hoechst-Celanese | Host. Violet | 14-4006 |
| Hoechst-Celanese | Host. Violet | 14-4008 |
| Ciba-Geigy | Brown | 10465 |
| Ciba-Geigy | Brown | 5R |
| Ciba-Geigy | Irgazin Yellow | ZGTLE |
| Mobay | Palomar Blue | B-4714 |
| Mobay | Franchon Maroon | MV-7013 |

Ferro Corporation is located at 4150 East 56th St., Cleveland, Ohio; Hoechst-Celanese Corporation is located at 500 Washington St., Covemtru, Rhode Island; Ciba-Geigy Corporation is located 444 Saw Mill River Rd., Ardsley, New York; and Mobay Corporation is located at 550 Belmont Avenue, Haledon, New Jersey.

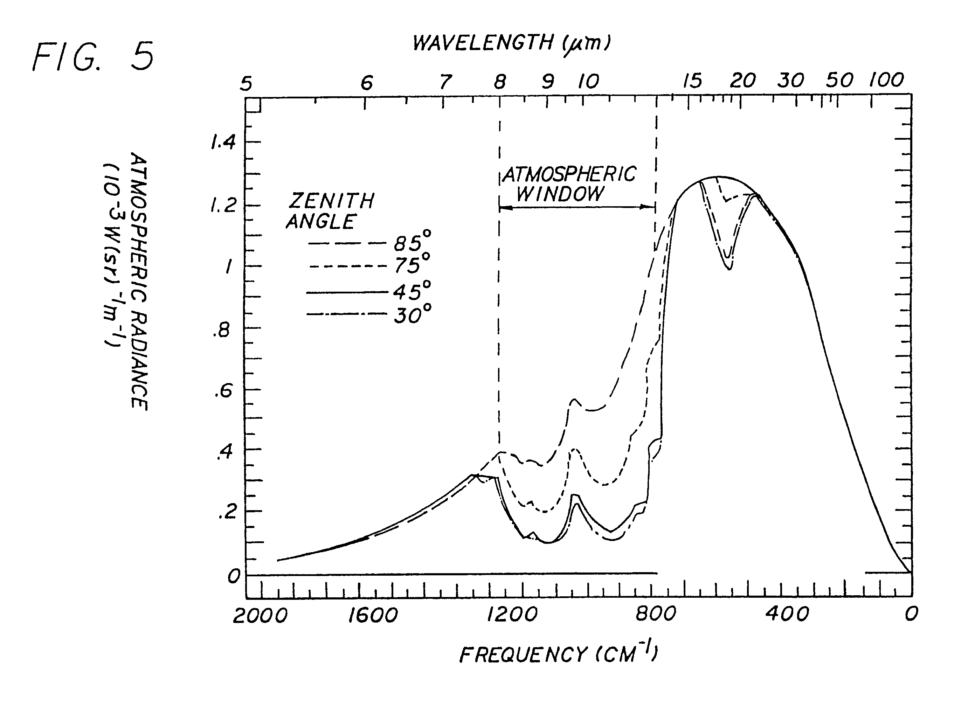

The paint reflectivity profile of Fig. 3 may be modified to maximize the radiative heat dissipation within the infrared region by reference to the atmospheric radiance distribution of a cloud-free sky shown in Fig. 5. Fig. 5 is a graph of the atmospheric radiance for a cloud-free sky at zenith angles of 30, 45, 75 and 85 degrees as a function of frequency and wavelength. As shown in Fig. 5, an "atmospheric window" of minimum radiance extends over wavelengths of between 8 and 13 μm. That is, the flux density of infrared radiation incident upon a vehicle exposed to the sun is substantially at a minimum within this atmospheric window. Additionally, vehicle thermal emission due to absorption of solar radiation peaks between the wavelengths of 8 and 13 μm. Consequently, a paint reflectivity profile with high reflectivity in the infrared region except between the wavelengths of 8 and 13 μm. will reflect the bulk of incident infrared radiation while simultaneously allowing significant vehicle radiative emissions in the 8 - 13 μm region.

A second preferred paint reflectivity profile which exploits the atmospheric radiance window in the manner described above is shown in Fig. 6. As shown by the second preferred profile of Fig. 6, the desired reflectivity is zero in the visible region and in the far-infrared region between 8 and 13 μm. The lack of reflectivity throughout the visible region reduces glare, while the absence of reflectivity in the far-infrared between 8 and 13 μm allows the vehicle 10 to dissipate heat via electromagnetic emission through the window of atmospheric radiance described above. Conversely, the reflection coefficient within the near-infrared range rises to a value of $R_2$. In the limiting case where $R_2$ is substantially equal to unity, a substantial percentage of incident solar energy (see Fig. 2) is prevented from reaching the vehicle 10.

It is of course understood that the teachings of the present invention may be used in other contexts to maximize the temperature increase of an object exposed to solar radiation. In such instances the preferred reflectivity and emissivity profiles will be designed to maximize the incident radiation absorbed and minimize radiative heat dissipation. Again, these profiles may be generated after first determining the electromagnetic emission of the object as a function of frequency (or wavelength).

Thus the present invention has been described with reference to a particular embodiment in connection with a particular application. Those having ordinary skill in the art and access to the teachings of the present invention will recognize additional modifications and applications within the scope thereof. For example, in alternative embodiments it may be desired to limit the temperature increase due to exposure to solar radiation of objects other than vehicles. Such objects may dissipate heat by emitting radiation across regions of the electromagnetic spectrum other than those specified herein. The preferred profiles of Figs. 3 & 4 may then be modified in accordance with these altered emission spectra.

Similarly, the present invention is not limited to coating compositions which include pigment particles suspended in a binder. Other coatings having the selectively reflective properties described herein may be utilized in alternative embodiments of the present invention.

It is therefore contemplated by the appended claims to cover any and all such modifications.

Accordingly,

## Claims

1. A method for minimizing the temperature increase of an object under illumination by electromagnetic radiation comprising the steps of:

   a) determining a first spectrum of wavelengths over which said object emits substantial electromagnetic energy and

   b) applying a selectively reflective coating to said object wherein said coating substantially absorbs electromagnetic radiation over said first wavelength spectrum and substantially reflects electromagnetic radiation over a second wavelength spectrum not overlapping said first spectrum.

2. The method of Claim 1 wherein said coating substantially absorbs electromagnetic radiation over a third wavelength spectrum not overlapping either said first or said second wavelength spectrum.

3. The method of Claim 1 wherein said first spectrum is included within the far-infrared region of the electromagnetic spectrum and wherein said second spectrum is included within the near-infrared portion of the electromagnetic spectrum.

4. The method of Claim 2 wherein said first spectrum is included within the far-infrared region of the electromagnetic spectrum and wherein said second spectrum is included within the near-infrared portion of the electromagnetic spectrum and said third spectrum is included within the visible portion of the electromagnetic spectrum.

5. A method for minimizing the temperature increase of an object under illumination by electromagnetic radiation, said object being immersed in an atmosphere, comprising the steps of:

   a) determining a first spectrum of wavelengths over which the radiance of said atmosphere is substantially at a minimum;

   b) determining a second spectrum of wavelengths, included within said first wavelength spectrum, over which said object emits substantial electromagnetic energy; and

   c) applying a coating to said object wherein said coating substantially absorbs electromagnetic radiation over said second wavelength spectrum and substantially reflects electromagnetic radiation over a third wavelength spectrum not overlapping said first spectrum.

6. A method for maximizing the temperature increase of an object under illumination by electromagnetic radiation comprising the steps of:

a) determining a first spectrum of wavelengths over which said object emits substantial electromagnetic energy and

b) applying a selectively reflective coating to said object wherein said coating substantially reflects electromagnetic radiation over said first wavelength spectrum and substantially absorbs electromagnetic radiation over a second wavelength spectrum not overlapping said first spectrum.

7. A coating for minimizing the temperature increase of an object under illumination by electromagnetic radiation, said coating having a material which provides a reflectivity of substantially zero in the visible and far infrared regions and substantially unity in the near infrared region.

8. The invention of Claim 7 including a material which provides an emissivity of substantially unity in the far infrared region.

9. The invention of Claim 7 wherein said material is a Welsbach material.

10. The invention of Claim 8 wherein said material is a Welsbach material.

11. The invention of Claim 7 wherein said material is a heavy metal oxide.

12. The invention of Claim 11 wherein said material is silicon oxy-nitride.

13. A coating for minimizing the temperature increase of an object under illumination by electromagnetic radiation, said coating having a material which provides an emissivity of substantially unity in the visible and far infrared regions and substantially zero in the near infrared region.

14. A coating for minimizing the temperature increase of an object under illumination by electromagnetic radiation, said coating having a material which provides a reflectivity of substantially zero in the visible region and between eight and thirteen microns and substantially unity in the near infrared region.

FIG. 1

FIG. 6

FIG. 2

Solar energy spectrum: $E_\lambda$ ($kWm^{-2}\mu m^{-1}$) SOLAR ENERGY versus WAVELENGTH (MICRONS), showing VISIBLE, NEAR INFRARED, INTERMEDIATE, and FAR INFRARED regions.

EP 0 454 350 A1

# FIG. 3

# FIG. 4

FIG. 5

WAVELENGTH (μm)

ATMOSPHERIC RADIANCE
(10⁻³W(sr)⁻¹m⁻¹)

ATMOSPHERIC
WINDOW

ZENITH
ANGLE
————— 85°
- - - - - 75°
————— 45°
—·—·— 30°

FREQUENCY (CM⁻¹)

EP 0 454 350 A1

EP 0 454 350 A1

| | European Patent Office | EUROPEAN SEARCH REPORT | Application Number |
|---|---|---|---|

| DOCUMENTS CONSIDERED TO BE RELEVANT | | | EP 91303406.2 |
|---|---|---|---|

| Category | Citation of document with indication, where appropriate, of relevant passages | Relevant to claim | CLASSIFICATION OF THE APPLICATION (Int. Cl.5) |
|---|---|---|---|
| X | DE - A1 - 3 241 516 (ROBERT BOSCH GMBH) * Totality * | 1 | B 05 D 5/00 B 05 D 7/14 B 32 B 15/08 |
| A | EP - A1 - 0 136 208 (SAINT-GOBAIN VITRAGE) * Claims * | 1 | |
| A | US - A - 4 546 045 (ELIAS) * Totality * | 1 | |
| | | | TECHNICAL FIELDS SEARCHED (Int. Cl.5) |
| | | | B 05 D B 32 B |

The present search report has been drawn up for all claims

| Place of search | Date of completion of the search | Examiner |
|---|---|---|
| VIENNA | 26-06-1991 | SCHÜTZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

12